Europäisches Patentamt

European Patent Office

Office européen des brevets

(11) Veröffentlichungsnummer: **0 433 605 A2**

## EUROPÄISCHE PATENTANMELDUNG

(21) Anmeldenummer: **90120358.8**

(51) Int. Cl.⁵: **H02J 9/00**

(22) Anmeldetag: **24.10.90**

(30) Priorität: **20.11.89 DE 8913669 U**

(43) Veröffentlichungstag der Anmeldung:
**26.06.91 Patentblatt 91/26**

(84) Benannte Vertragsstaaten:
**AT BE CH DE DK ES FR GB GR IT LI LU NL SE**

(71) Anmelder: **HAGENUK GMBH**
**Westring 431**
**W-2300 Kiel 1(DE)**

(72) Erfinder: **Frank, Karl-Heinz**
**Max Planck-Strasse 38**
**W-2308 Preetz(DE)**

(74) Vertreter: **Hansmann, Dierk, Dipl.-Ing.**
**Jessenstrasse 4**
**W-2000 Hamburg 50(DE)**

(54) **Netzgerät, insbesondere für Fernmeldegeräte.**

(57) Bei einem Netzgerät ist vorgesehen, zusätzlich eine netzunabhängige Spannungsquelle (10) als Ersatzspannungsquelle in einem Aufnahmeraum (9) anzuordnen und den Aufnahmeraum (9) durch eine lösbare Abdeckung (11) zugänglich zu machen.

FIG.2

EP 0 433 605 A2

## NETZGERÄT, INSBESONDERE FÜR FERNMELDEGERÄTE

Die Erfindung bezieht sich auf ein Netzgerät, insbesondere für Fernmeldegeräte, in Form eines Vorschaltgerätes als selbständiges Bauelement, das einerseits mit dem Versorgungsnetz und andererseits mit dem zu versorgenden Gerät verbunden ist.

Derartige Anordnungen sind bekannt, um Telefonapparate mit einer externen Zusatzspeisung zu versehen. Weiterhin ist es erforderlich, die Funktionsfähigkeit derartig versorgter Geräte bei Netzausfall mit Batterien bzw. Akkumulatoren aufrechtzuerhalten. Diese netzunabhängige Spannungsquelle werden hierzu im Fernmeldegerät angeordnet. Hierbei besteht der Mangel, daß ein relativ großes Volumen hierfür erforderlich ist und somit bei den zur Zeit bestehenden Design-Vorgaben mit relativ kleinen Geräten die Unterbringung Schwierigkeiten macht. Ferner macht die Auswechslung im Fernmeldegerät erhebliche Schwierigkeiten, wobei auch der Eingriff ins Gerät von den Herstellern unerwünscht ist.

Die Aufgabe der Erfindung ist es, für gattungsgemäße Anordnungen eine zusätzliche netzunabhängige Spannungsquelle zu schaffen, die eine Platzeinsparung im Gerät ermöglicht und eine gute Zugänglichkeit beim Auswechseln gewährleistet.

Die Lösung dieser Aufgabe erfolgt neuerungsgemäß dadurch, daß eine netzunabhängige Spannungsquelle, wie Akkumulatoren, Batterien, zusätzlich im Vorschaltgerät als Ersatzspannungsquelle austauschbar angeordnet und einschaltbar ist.

Hierdurch wird eine vollständige Stromversorgung geschaffen, und es wird kein zusätzlicher Aufnahmeraum im zu versorgende Gerät beansprucht. Auch für das Auswechseln der netzunabhängigen Spannungsquelle ist kein Eingriff in das zu versorgende Gerät erforderlich.

Eine günstige Ausgestaltung besteht darin, daß die netzunabgängige Spannungsquelle aus mindestens einer Batterie besteht, die in einem angepaßten, vorgeformten Aufnahmeraum im Innenraum des Vorschaltgerätes einsetzbar ist, und der Aufnahmeraum durch eine außenliegende einsetzbare Abdeckung als Teil des Gesamtgehäuses gebildet ist.

Weiterhin ist vorgesehen, daß der Aufnahmeraum für die einzusetzende Spannungsquelle integrierte Anschluß- und Verbindungskontakte aufweist.

In der Zeichnung ist ein Ausführungsbeispiel eines Netzgerätes schematisch dargestellt. Es zeigen:

Fig. 1 eine untere Ansicht eines Steckernetzgerätes,

Fig. 2 eine geschnittene Seitenansicht eines Gerätes,

Fig. 3 eine Vorderansicht eines Gerätes.

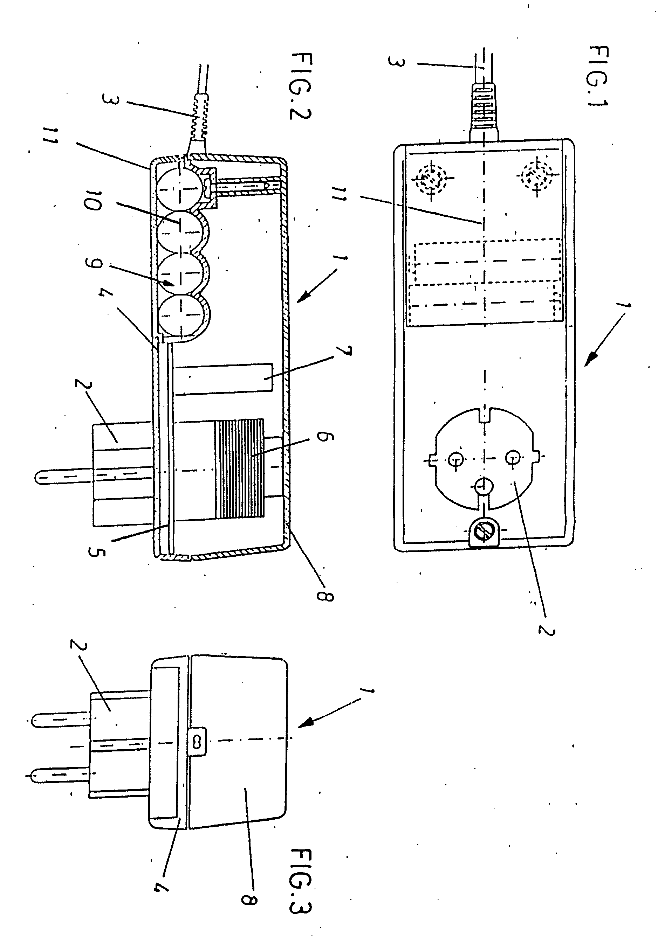

Das dargestellte Steckernetzgerät 1 wird über einen integrierten Stecker 2 mit dem Versorgungsnetz verbunden, während der Anschluß 3 zum Fernmeldegerät geführt wird. Das Steckernetzgerät 1 besteht aus einem Basisteil 4, das eine Leiterplatte 5, einen Transformator 6 und einen Kühlkörper 7 aufnimmt und durch eine Abdeckung 8 in bekannter Weise abgeschlossen wird.

Zusätzlich ist im gebildeten Innenraum des Steckernetzgerätes 1 ein Aufnahmeraum 9 für Batterien 10 gebildet, der entsprechend zur Aufnahme der Batterien 10 vorgeformt ist. Dieser Aufnahmeraum 9 ist von außen zugänglich und ist durch eine gesonderte Abdeckung 11 verschlossen, die einen Teil des Gesamtgehäuses bildet. Die Batterien 10 als netzunabhängige Spannungsquelle werden beim Einsetzen durch integrierte Anschluß- und Verbindungskontakte in ihre Funktion gebracht.

## Ansprüche

1. Netzgerät, insbesondere für Fernmeldegeräte, in Form eines Vorschaltgerätes als selbständiges Bauelement, das einerseits mit dem Versorgungsnetz und andererseits mit dem zu versorgenden Gerät verbunden ist, dadurch gekennzeichnet, daß eine netzunabhängige Spannungsquelle (10), wie Akkumulatoren, Batterien, zusätzlich im Vorschaltgerät (1) als Ersatzspannungsquelle austauschbar angeordnet und einschaltbar ist.

2. Netzgerät nach Anspruch 1, dadurch gekennzeichnet, daß die netzunabgängige Spannungsquelle aus mindestens einer Batterie (10) besteht, die in einem angepaßten, vorgeformten Aufnahmeraum (9) im Innenraum des Vorschaltgerätes (1) einsetzbar ist, und der Aufnahmeraum (9) durch eine außenliegende einsetzbare Abdeckung (11) als Teil des Gesamtgehäuses gebildet ist.

3. Netzgerät nach Anspruch 1 oder 2, dadurch gekennzeichnet, daß der Aufnahmeraum (9) für die einzusetzende Spannungsquelle (10) integrierte Anschluß- und Verbindungskontakte aufweist.